Europäisches Patentamt

(19) European Patent Office

Office européen des brevets

(11) Publication number: **0 269 165**
**B1**

## EUROPEAN PATENT SPECIFICATION

(12)

(45) Date of publication of the patent specification: 14.11.90

(21) Application number: 87202171.2

(22) Date of filing: 09.11.87

(51) Int. Cl.⁵: **F04C 2/344**, G01F 3/06

(54) **Liquid flow meter.**

(30) Priority: **17.11.86 NL 8602917**

(43) Date of publication of application:
**01.06.88 Bulletin 88/22**

(45) Publication of the grant of the patent:
**14.11.90 Bulletin 90/46**

(84) Designated Contracting States:
**AT BE CH DE ES FR GB GR IT LI LU NL SE**

(56) References cited:
**DE-C- 455 839**
**GB-A- 654 808**
**NL-A- 6 716 771**
**US-A- 1 658 524**

(73) Proprietor: **VAF Instruments B.V., Vierlinghstraat 24, NL-3316 EL Dordrecht(NL)**

(72) Inventor: **De Jong, Job, Esdoornlaan 27, NL-3319 XD Dordrecht(NL)**

(74) Representative: **van der Beek, George Frans, Ir. et al, Nederlandsch Octrooibureau Scheveningseweg 82 P.O. Box 29720, NL-2502 LS 's-Gravenhage(NL)**

## Description

The invention relates to a liquid flow meter, comprising a housing with a cylindrical cavity of non-circular cross section, with such a centre that lines in the cross section which pass through said centre intersect the walls of the cavity at points which are always the same distance from each other, and a rotor placed centrally in said cavity having at least one pair of radial slits which are diametrically opposite each other and each of which accommodates a radially displaceable blade, while between the blades of a pair provision is made for a rod which extends through a bore in the rotor.

Such a device is known from NL-C 165 532.

In this known construction the rod is connected at both ends to a blade. The blades are to this end provided with a first bore into which the said rod projects with ample clearance, while a second bore placed at right angles to each first bore in the blade accommodates a cylindrical clamping fixing element whose diameter is greater than the diameter of the rod. The end of the rod is fixable in a third bore of the clamping fixing element, and this element is rotatable about its shaft in a second bore. Through this design, the blade can carry out a small rotation about the clamping fixing element, so that unevennesses in the housing can be followed. This fixing construction between rod and blades makes the device expensive, due to the relatively large number of parts; these parts have to be manufactured with great precision, while both the bores provided in the blade and the bore disposed in the rotor for the rod to pass through have to be positioned extremely accurately to prevent jamming of the blades in the axial direction. Further the linearity of the measurement leaves a lot to be desired.

The object of the invention is to eliminate these disadvantages and produce a considerably cheaper and simpler design of the device mentioned in the preamble.

According to the invention, the liquid flow meter is to this end characterized in that the ends of the rod only engage with the blades without any intermediate connection or spring means.

The invention is based on the idea that the rod fulfils its function excellently if it just holds the blades of a pair at the desired distance during a revolution of said pair of blades. The bore provided in the rotor for accommodation of a rod need not be so accurately positioned. The linearity is better than that with the known device, in other words, the measuring error is virtually constant over the entire liquid flow rate range. The measuring accuracy is high, and the pressure drop over the meter is minimal. Moreover, the meters require very little maintenance. The measuring accuracy is hardly affected at all by the liquid viscosity over a wide range. The liquid meter is therefore suitable for virtually any liquid.

NL-A 6 716 771 discloses a pump or motor, comprising a housing with a cylindrical cavity of non-circular cross section and a rotor with radial recesses. In each of these recesses a blade is placed. Between the blades of a pair a rod is provided which is movable in the rotor. The end of the rod is provided with axial bores for taking up a helical spring. The blades are pushed outwards by the springs to press the sealings at the outer ends of the blades on the inner wall of the housing or on the inner wall of an inlay. Such a construction is unsuitable for a liquid flow meter, as the spring loading of the blades lead to a considerable friction which on its turn leads to an inaccurate working.

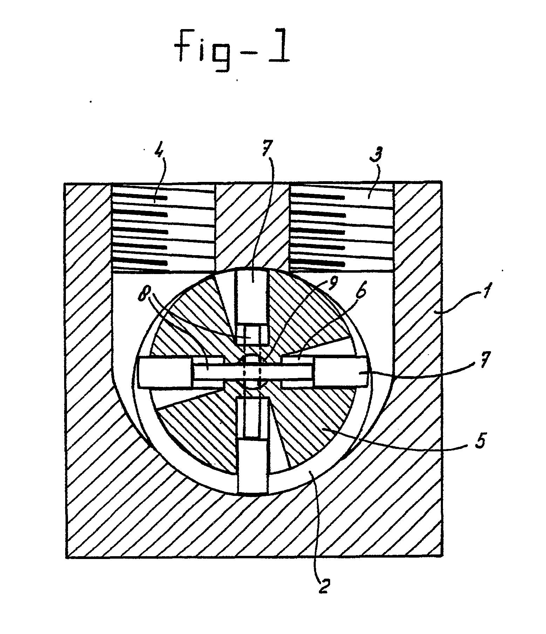

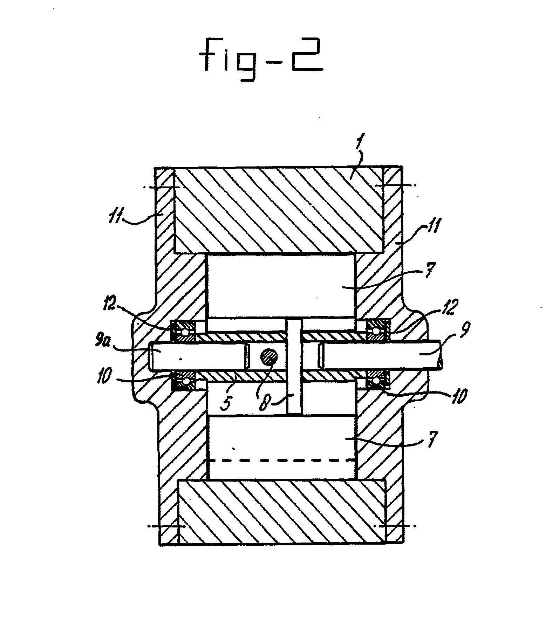

The invention will now be explained in greater detail with reference to the figures, in which the embodiment is shown in cross section (Fig. 1) and in longitudinal section (Fig. 2).

The housing 1 of the device shown has a cylindrical cavity 2 of non-circular cross section which is connected to a tangential liquid inlet 3 and a tangential liquid outlet 4. Placed in the cavity is a circular cylindrical rotor 5. The cavity 2 has a central axis which can be defined in such a way that vertical lines passing through said axis intersect the wall of the cavity at points which are always at the same distance from each other. The axis of the rotor coincides with the axis of the cavity. The rotor has two pairs of radial slits 6. In each slit 6 is a blade 7. The diametrically opposite blades of each pair are held apart by a rod 8. The rod 8 runs through a bore which intersects the axis of the rotor.

There is no connection between the ends of the rod 8 and the blades 7. The blades have relatively great freedom of movement and can be directed towards the plane along which they move both in the axial and in the radial direction. Nevertheless, the device is easy and cheap to produce because there is no connecting structure between the ends of each rod 8 and the blades 7 which is made up of a number of parts which have to be made accurately. If the blades are worn, the rods 8 can simply be replaced by some a little longer. It is not out of the question for the rods 8 to be slightly adjustable in length by being made up to two parts which are displaceable (for example screwable) relative to each other. If the housing 1 and the blades 7 do not exhibit the same thermal expansion, the rods 8 can be made of such material or composite of materials that the radial gap between housing and blades remains the same in the event of temperature changes.

The shafts of the rotor are indicated by 9 and 9a. They are supported by means of bearings 10 in covers 11 which are connected to the housing 1. A ring 12 is placed behind each bearing.

Since there is no connection between the rods 8 and their blades, the bores for taking the rods 8 can be made with more ample tolerance limits, without there being a risk of a blade jamming in the axial direction. The linearity of the measurement is better than that in known constructions.

Various modifications are possible within the scope of the invention. What is essential is that the ends of each rod 8 engage only with the blades 7 without being further connected to said blades.

## Claims

Liquid flow meter, comprising a housing with a cylindrical cavity of non-circular cross section, with such a centre that lines in the cross section which pass through said centre intersect the walls of the cavity at points which are always the same distance from each other, and a rotor placed centrally in said cavity having at least one pair of radial slits which are diametrically opposite each other and each of which accommodates a radially displaceable blade, while between the blades of a pair provision is made for a rod which extends through a bore in the rotor, characterized in that the ends of the rod (8) only engage with the blades (7) without any intermediate connection or spring means.

## Patentansprüche

Flüssigkeitsmengenmesser, mit einem Gehäuse, das einen zylindrischen Hohlraum mit einem nicht kreisförmigen Querschnitt hat, und ein derartiges Zentrum, daß Linien, die in dem Querschnitt durch das Zentrum verlaufen, die Wände des Hohlraums an Punkten schneiden, die immer denselben Abstand voneinander besitzen, und mit einem Rotor, der zentral in dem Hohlraum angeordnet ist, mit mindestens einem Paar von radialen Schlitzen, die einander diametral gegenüberliegen, und jeweils eine radial verschiebbare Schaufel enthalten, wobei zwischen den Schaufeln eines Paars ein Stab vorgesehen ist, der eine Bohrung des Rotors durchsetzt, gekennzeichnet dadurch, daß die Enden des Stabes (8) nur mit den Schaufeln (7) in Eingriff stehen, ohne irgendeine dazwischen befindliche Verbindung oder Federmittel.

## Revendications

Dispositif de mesure du débit d'un liquide, comportant un carter qui présente une cavité cylindrique de section droite non circulaire ayant un centre tel que des droites de la section droite passant par ledit centre coupent les parois de la cavité en ces points qui sont toujours à la même distance l'un de l'autre, et comportant aussi un rotor placé au centre de ladite cavité et présentant au moins une paire de fentes radiales qui sont diamétralement opposées l'une à l'autre et qui reçoivent chacune une palette qui peut se déplacer radialement, tandis qu'entre les palettes d'une même paire est prévue une tige qui passe dans un perçage du rotor, caractérisé en ce que les extrémités de la tige (8) viennent seulement en contact avec les palettes (7) sans aucune liaison intermédiaire ou sans aucun moyen élastique intermédiaire.

Fig-1

# Fig-2